(19) Europäisches Patentamt
European Patent Office
Office européen des brevets

(11) Numéro de publication: **0 354 138 A1**

(12) **DEMANDE DE BREVET EUROPEEN**

(21) Numéro de dépôt: **89420273.8**

(22) Date de dépôt: **25.07.89**

(51) Int. Cl.[5]: **C 08 G 77/18**
C 08 G 77/08, C 08 L 83/04

(30) Priorité: **29.07.88 FR 8810538**

(43) Date de publication de la demande:
**07.02.90 Bulletin 90/06**

(84) Etats contractants désignés: **DE FR GB IT**

(71) Demandeur: **RHONE-POULENC CHIMIE**
**25, quai Paul Doumer**
**F-92408 Courbevoie Cédex (FR)**

(72) Inventeur: **Frances, Jean-Marc**
**9, avenue Condorcet**
**F-69100 Villeurbanne (FR)**

**Peccoux, Pierre-Michel**
**71, rue Louis-Gorjus**
**F-69004 Lyon (FR)**

(74) Mandataire: **Seugnet, Jean Louis et al**
**RHONE-POULENC CHIMIE Service Brevets Chimie**
**Centre de Recherches des Carrières B.P. 62**
**F-69192 Saint-Fons Cédex (FR)**

(54) **Procédé de préparation de diorganopolysiloxanes à groupements terminaux alcoxy.**

(57) L'invention concerne un procédé de fonctionnalisation d'huile alpha, oméga, dihydroxy-diorganopolysiloxane par réaction sur un polyalcoxysilane en présence d'une quantité catalytiquement efficace d'un complexe du zinc de formule

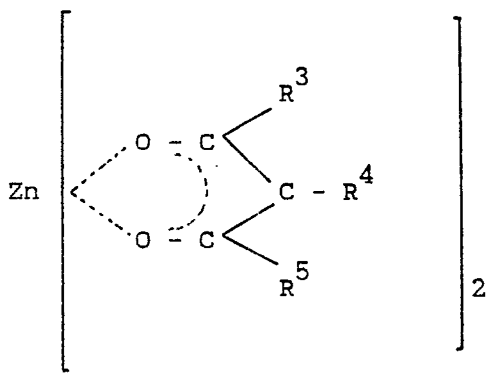

Application des huiles fonctionnalisées obtenues à la préparation de compositions élastomériques monocomposntes, stables au stockage en absence d'humidité de l'air.

**EP 0 354 138 A1**

## Description

### PROCEDE DE PREPARATION DE DIORGANOPOLYSILOXANES A GROUPEMENTS TERMINAUX ALCOXY

La présente invention concerne un procédé de préparation de diorganopolysiloxanes à groupements terminaux alcoxy, dénommés ci-dessous PF : polymères fonctionnalisés, et l'utilisation, d'au moins certains d'entre eux, notamment comme l'un des constituants essentiels de compositions élastomères organopolysiloxanes monocomposantes stables au stockage en absence d'humidité et réticulant à l'humidité atmosphérique à température ambiante dénommées par la suite compositions élastomères vulcanisables à froid (EVF).

On connaît déjà de nombreux procédés de préparation de diorganopolysiloxanes à terminaisons alcoxy.

On peut notamment citer les procédés décrits dans les brevets US-A-3 122 522, US-A-3 161 614 et le brevet US redélivré RE-A-2970. Les procédés décrits dans ces brevets ne sont pas utilisés industriellement à l'heure actuelle car ils sont trop coûteux ou conduisent à des PF de mauvaise qualité pour leur utilisation essentielle comme polymère de base pour les compositions EVF.

Un progrès important a été apporté par le brevet US-A-3 542 901 décrivant un procédé de préparation de PF par réaction d'un polymère alpha-omégadihydroxydiorganopolysiloxane, autrement dit un diorganopolysiloxane à terminaisons silanol sur un polyalcoxysilane en présence d'un catalyseur de fonctionnalisation à fonction amine.

Ce procédé est certes efficace mais il est très difficile d'éliminer correctement l'amine qui peut avoir un effet néfaste sur la stabilité au stockage de la composition EVF en présence du catalyseur de condensation qui est un composé d'un métal généralement l'étain.

D'autre catalyseurs peuvent être utilisés comme par exemple un dérivé organique du titane (brevet US-A-4 111 890) ; un chélate d'alcoxyaluminium (brevet britannique GB-A-2 144 758) et une hydroxylamine N-N disubstituée (brevet français FR-A-2 508 467). Ces catalyseurs peuvent présenter l'inconvénient d'être peu efficaces ou d'avoir une influence néfaste sur la stabilité au stockage des compositions EVF.

Un autre procédé pour faire des PF consiste à utiliser des silanes mixtes présentant en plus des groupements alcoxy, un groupe hydrolysable tel qu'un groupe amido, amino, carbamate, oxime, etc ..., éventuellement en présence d'un catalyseur de fonctionnalisation connu et d'un polyalcoxysilane.

Des procédés de ce type sont décrits notamment dans les brevets US-A-3 697 568, US-A-3 896 079 et EP-A-69 256.

Ces procédés sont efficaces mais nécessitent l'utilisation de silanes mixtes coûteux. Par ailleurs les produits organiques issus des groupes hydrolysables après réaction peuvent avoir un effet néfaste sur la composition EVF (voir à ce sujet les pages 4 et 5 du brevet français FR-A-2 543 562).

La présente invention a précisément pour but de proposer un catalyseur de fonctionnalisation efficace et qui ne présente pas d'effets secondaires néfastes dans les compositions EVF, même dans le cas où il n'a pas été séparé ou éliminé préalablement des PF obtenus à l'aide d'un tel catalyseur.

Ce but et d'autres sont atteints par la présente invention qui concerne en effet un procédé de préparation de diorganopolysiloxane linéaire comprenant au moins deux groupements alcoxy à chaque extrémité de chaîne, caractérisé en ce qu'on fait réagir au moins un diorganopolysiloxane linéaire comprenant un groupement hydroxy à chaque extrémité de chaîne avec au moins un polyalcoxysilane de formule :

$(R^1)_a(OR^6)_bSi(OR^2)_{4-a-b}$ (3)

en présence d'une quantité catalytiquement efficace d'un complexe de zinc de formule :

$Zn\ Q_2$, (4)

- où a est 0 ou 1,
- où b est 0,1 ou 2,
- où $R^1$ représente un radical monovalent hydrocarboné saturé ou non en $C_1$ à $C_{13}$, substitué ou non substitué.
- où $R^2$ représente un radical organique aliphatique ayant de 1 à 8 atomes de carbone choisi notamment entre les radicaux alkyle, les radicaux alkyéther, les radicaux alkylester, les radicaux alkylcétone, les radicaux alkylcyano et les radicaux aralkyle ayant de 7 à 13 atomes de carbone,
- ou $R^6$ peut avoir la même signification que celle de $R^2$ ou représente un radical ayant moins d'atomes de carbone que $R^2$,
- où Q est un anion monovalent de formule

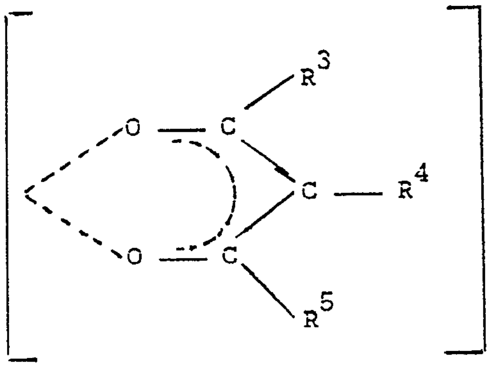

(5)

dans laquelle $R^3$ et $R^5$, identiques ou différents, représentent des atomes d'hydrogène, des radicaux alkyles en $C_1$ à $C_{12}$, halogénés ou non, des radicaux alcényles en $C_2$ à $C_8$, halogénés ou non, des radicaux cycloalkyles halogénés ou non en $C_4$ à $C_8$, des radicaux aryles mononucléaires, halogénés ou non en $C_6$ à $C_{10}$, des radicaux arylalkyles mononucléaires halogénés ou non en $C_7$ à $C_{12}$, des radicaux alcoxy en $C_1$ à $C_5$, halogénés ou non, des radicaux acyloxy en $C_1$ à $C_6$, des radicaux cyanoalkyles ayant la partie alkyle en $C_1$ à $C_4$, des radicaux cyanoalcoxy ayant la partie alcoxy en $C_1$ à $C_5$, dans laquelle $R^4$ représente l'atome d'hydrogène, un radical hydrocarboné, halogéné ou non, en $C_1$ à $C_8$, choisi parmi les radicaux alkyles, alcényles et les radicaux aryles mononucléaires, $R^4$ pouvant se coupler avec $R^5$ pour donner un radical hydrocarboné cyclique en $C_5$ à $C_{12}$, subtitué ou non par des radicaux chloro, nitro, cyano.

Un autre but de la présente invention est l'utilisation de diorganopolysiloxanes linéaires comprenant au moins deux groupements alcoxy à chaque extrémité de chaîne obtenus selon le procédé de la présente invention pour la préparation de compositions polysiloxane monocomposantes, stables au stockage en absence d'humidité et réticulant en élastomère en présence d'humidité.

Plus précisément les diorganosiloxanes comprenant au moins deux groupements alcoxy à chaque extrémité de leur chaîne ont pour formule

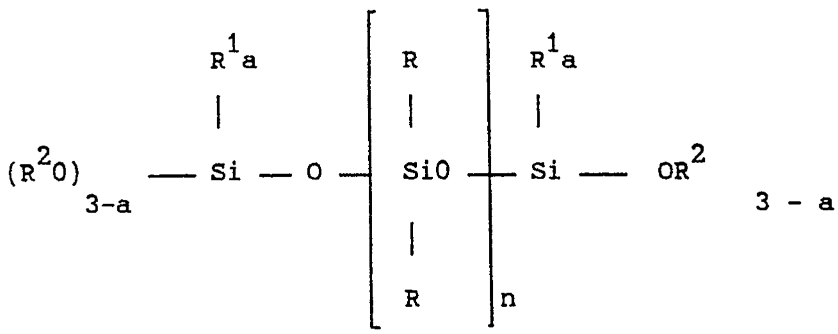

(1)

et le diorganopolysiloxane comprenant un groupement hydroxy à chaque extrémité de sa chaîne a pour formule :

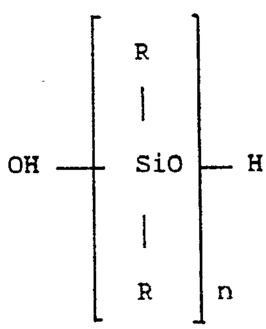

(2)-

- où $R^1$ et $R^2$ ont la même signification que celle donnée ci-avant pour le silane de formule (3),
- où les radicaux R, identiques ou différents représentent des radicaux monovalents hydrocarbonés ayant de 1 à 10 atomes de carbone, éventuellement substitués par des atomes d'halogènes ou des groupes cyano. De préférence les radicaux R sont choisis parmi les radicaux méthyle, phényle, vinyle et trifluoro-3,3,3 propyle.
- où a est 0 ou 1,
- où n a une valeur suffisante pour conférer aux polymères de formule (1) et (2) une viscosité de 25 à 1 000 000 mPa.s à 25° C, étant entendu que le polysiloxane de formule (1) peut avoir une formule moyenne dans laquelle la valeur de n est plus forte ou plus faible que la valeur de n du diorganopolysiloxane (2) réagissant sur le silane

de formule (3).

Les radicaux R mentionnés ci-avant comprennent :

- les radicaux alkyles et halogénoalkyles ayant de 1 à 10 atomes de carbone tels que les radicaux méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle.
- les radicaux cycloalkyles et halogénocycloalkyles ayant de 1 à 10 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle.
- les radicaux alcényles ayant de 2 à 4 atomes de carbone tels que les radicaux vinyle, allyle, butène-2 yle.
- les radicaux aryles et halogénoaryles mononucléaires ayant de 6 à 10 atomes de carbone tels que les radicaux phényle, tolyle, xylyle, chlorophényle, dichlorophényle, trichlorophényle.
- les radicaux cyanoalkyles dont les chaînons alkyles ont de 2 à 3 atomes de carbone tels que les radicaux β-cyanoéthyle et -cyanopropyle.

A titre d'exemples concrets de motifs $R_2SiO$ présents dans l'alpha, oméga dihydroxydiorganopolysiloxane de formule (2) on peut citer :

$(CH_3)_2SiO$,
$CH_3(CH_2=CH)SiO$
$CH_3(C_6H_5)SiO$
$(C_6H_5)_2SiO$,
$CF_3CH_2CH_2(CH_3)SiO$
$NC\text{-}CH_2CH_2(CH_3)SiO$
$NC\text{-}CH(CH_3)CH_2(CH_2=CH)SiO$
$NC\text{-}CH_2CH_2CH_2(C_6H_5)SiO$

Il doit être compris que dans le procédé selon la présente invention, on peut utiliser comme polymère de formule (2) un mélange constitué de polymères alpha, oméga-di(hydroxy)- diorganopolysiloxanes qui diffèrent entre eux par le poids moléculaire et/ou la nature des groupements liés aux atomes de silicium. Il doit être indiqué de plus que le polymère de formule (2) peut éventuellement comprendre des motifs monoorganosiloxy $RSiO_{1,5}$ et/ou des motifs $SiO_2$, dans la proportion d'au plus 2 % par rapport au nombre de motifs diorganosiloxy $R_2SiO$.

Ces polymères alpha, oméga-di(hydroxy)diorganopolysiloxanes sont commercialisés ; en outre, ils peuvent être aisément fabriqués selon des techniques maintenant bien connues.

Parmi les polyalcoxysilanes de formule $(R^1)_a(OR^6)_bSi(OR^2)_{4-a-b}$ pouvant être utilisés dans le procédé selon la présente invention on peut notamment citer ceux ci-après :

$Si(OCH_3)_4$
$Si(OCH_2CH_3)_4$
$Si(OCH_2CH_2CH_3)_4$
$(CH_3O)_3SiCH_3$
$(C_2H_5O)_3SiCH_3$
$(CH_3O)_3SiCH = CH_2$
$(C_2H_5O)_3SiCH = CH_2$
$(CH_3O)_3SiCH_2\text{-}CH = CH_2$
$(CH_3O)_3Si\ [CH_2\text{-}(CH_3)C = CH_2]$
$(C_2H_5O)_3Si(OCH_3)$
$Si(OCH_2\text{-}CH_2\text{-}OCH_3)_4$
$CH_3Si(OCH_2\text{-}CH_2\text{-}OCH_3)_3$
$CH_2 = CHSi(OCH_2CH_2OCH_3)_3$
$C_6H_5Si(OCH_3)_3$
$C_6H_5Si(OCH_2\text{-}CH_2\text{-}OCH_3)_3$

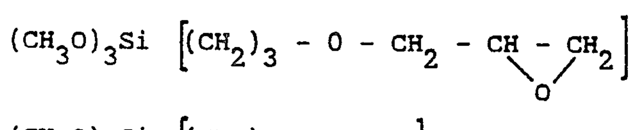

$(CH_3O)_3Si\ [(CH_2)_2 - CH_2Cl]$
$(CH_3O)_3Si\ [(CH_2)_3 - OOC - (CH_3)\ C = CH_2]$

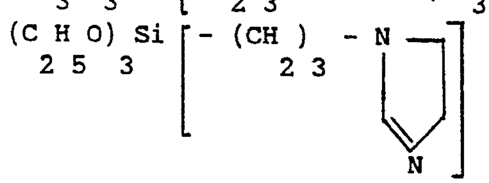

$(C_2H_5O)_3Si\ [(CH_2)_2 - CH_2Cl]$
$(CH_3O)_3Si\ [(CH_2)_3 - NH_2]$

$(C_2H_5O)_3Si\ [(CH_2)_3 - NH_2]$
$(CH_3O)_3Si\ [(CH_2)_3 - NH - (CH_2)_2 - NH_2]$
$(C_2H_5O)_3Si\ [(CH_2)_3 - NH - (CH_2)_2 - NH_2]$
$(CH_3O)_3\text{-}Si(CH_2)_3\text{-}SH$

Les polyalcoxysilanes les plus couramment utilisés sont :
$Si(OCH_3)_4$ , $Si(OC_2H_5)_4$ , $CH_3Si(OCH_3)_3$ , $CH_3Si(OC_2H_5)_3$ , $(C_2H_5O)_3Si(OCH_3)$.

En ce qui concerne le catalyseur de formule (4), plus explicitée par la formule (5), la signification de Q, $R^3$ et $R^5$ englobe plus spécialement :
- les radicaux alkyles, halogénés ou non, en $C_1$-$C_{12}$ tels que les radicaux méthyle, éthyle, propyle, isopropyle, butyle, isobutyle, butyle secondaire, tertiobutyle, pentyle, hexyle, heptyle, éthyl-2 hexyle, octyle, décyle, dodecyle, chlorométhyle, dichloro-2,5 éthyle.
- les radicaux alcényles en $C_2$-$C_8$, halogénés ou non, tels que les radicaux vinyle, allyle, méthallyle, butène-2 yle, pentène-2 yle, octène-3 yle, fluoro-5 pentène-2 yle.
- les radicaux cycloalkyles halogénés ou non en $C_4$-$C_8$, tels que les radicaux cyclopentyle, cyclohexyle, méthylcyclohexyle, cyclooctyle, 3-4 dichlorocyclohexyle, 2,6 dibromocycloheptyle.
- les radicaux aryles mononucléaires, halogénés ou non, en $C_6$-$C_{10}$ tels que les radicaux phényle, tolyle, xylyle, cumenyle, chlorophényle, dichlorophényle, trichlorophényle, difluorophényle, trifluorométhylphényle.
- les radicaux arylalkyles mononucléaires, halogénés ou non, en $C_7$-$C_{12}$, tels que les radicaux benzyles, phényléthyle, phénylpropyle, trifluorométhylphényl-éthyle.
- les radicaux alcoxy en $C_1$-$C_5$, halogénés ou non, tels que les radicaux méthoxy, éthoxy, propoxy, butoxy, pentoxy, chlorométhoxy, dichloroéthoxy, dichloropentoxy.
- les radicaux acyloxy en $C_1$-$C_6$ tels que les radicaux acétoxy, propanoyloxy, butanoyloxy, pentanoyloxy, hexanoyloxy.

Les symboles $R^3$ et $R^5$, peuvent représenter de plus des atomes d'hydrogène, des radicaux cyanoalkyle ayant la partie alkyle en $C_2$-$C_4$, des radicaux cyanoalkyle ayant la partie alcoxy en $C_1$-$C_5$ et des radicaux organiques en $C_1$-$C_{12}$.

A titre illustratif de radicaux cyanoalkyles, peuvent être cités les radicaux cyanoéthyle, cyanopropyle, cyanobutyle, et de radicaux cyanoalcoxy peuvent être cités les radicaux cyanoéthoxy, cyanopropoxy.

Le symbole $R^4$ représente l'atome d'hydrogène, un radical hydrocarboné, halogéné ou non, en $C_1$-$C_8$.

Ce radical englobe plus spécialement les radicaux alkyles, halogénés ou non, tels que les radicaux méthyle, éthyle, propyle, butyle, hexyle, octyle, et les radicaux aryles mononucléaires, halogénés ou non tels que les radicaux phényle, tolyle, chlorophényle, dichlorophényle.

En outre $R^4$, en se couplant avec $R^5$, représente un radical hydrocarboné cyclique en $C_5$-$C_{12}$, substitué ou non par des radicaux chloro, nitro, cyano. Ce radical hydrocarboné cyclique peut notamment être un cycle aromatique (benzènique par exemple) ou ceux de formule :

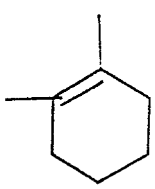
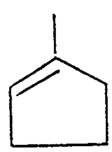
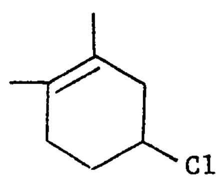
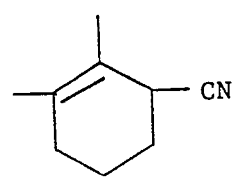

Les catalyseurs de formule (4 et 5) pour la mise en oeuvre du procédé selon la présente invention sont décrits dans la littérature ainsi que leur mode de préparation, notamment dans l'ouvrage "Métal béta-diketonates and allied derivatives" de MEHROTRA, BOHRA et GAUR, publié en 1978 par Academic Press.

A titre de catalyseurs répondant à la formule (4) on peut plus particulièrement citer :
- le bis acétylacétonate de zinc (où $R^3$ et $R^5$ représentent un groupement $CH_3$ et $R^4$ un atome d'hydrogène, dans la formule 5).
- le bis(diphényl 1-3 propanedionato 1-3) zinc, également appelé le dibenzoylméthanate de zinc (où $R^3$ et $R^5$ représentent un groupement phényl $-C_6H_5$ et $R^4$ représenté un atome d'hydrogène dans la formule 5).
- le bis(phényl-1 méthyl-5 hexanedionato-1-3) zinc, également appelé le (benzoyl-1 méthyl-4 pentanonato 2) zinc, (où $R^3$ représente un groupement phényle $-C_6H_5$, où $R^4$ représente un atome d'hydrogène et où $R^5$ représente le groupement isobutyle $-CH_2\text{-}CH(CH_3)\text{-}CH_3$, dans la formule (5)).

Dans le procédé selon la présente invention, pour une mole de groupement silanol ($\equiv$ SiOH) du polydiorganosiloxane de formule (2) comprenant un groupement hydroxy à chaque extrémité de chaîne on utilise généralement de 1 à 5 mole, de préférence de 2 à 4,8 moles de polyalcoxysilane de formule (3).

Par quantité catalytiquement efficace de complexe du zinc de formule (4), on entend de 0,001 à 0,5, de préférence de 0,02 à 0,1 moles de ce complexe par rapport à 1 mole de groupement silanol ($\equiv$ SiOH) du polydiorganosiloxane de formule (2).

Le procédé selon la présente invention peut être effectué entre 20 et 140° C, de préférence entre 40 et 100° C. Le temps de réaction est d'autant plus court que la température est plus élevée et il est en général

inférieur à 2 h 00 à une température de 80° C. Le procédé est mis en oeuvre à l'abri de l'humidité, par exemple dans un réacteur fermé dans lequel on a fait le vide, plus remplacé l'air chassé par un gaz anhydre tel que l'azote.

La demande de brevet selon la présente invention concerne de plus l'utilisation des diorganopolysiloxanes comprenant au moins deux groupements alcoxy à chaque extrémité de chaîne, obtenus selon le procédé de la présente invention, pour la préparation de compositions polysiloxanes monocomposantes stables au stockage en absence d'humidité et réticulant en élastomère en présence d'humidité.

Ces compositions sont obtenues en ajoutant (en poids) à 100 parties du polymère fonctionnalisée de formule (1) obtenu selon le procédé de la présente invention :

- 0 à 250 parties de charges minérales,
- 0 à 20 parties, de préférence 0 à 10 parties d'au moins un additif choisi parmi des aminoorganosilanes, aminoorganopolysiloxanes et guanidinoorganosilanes portant par molécule à la fois :

. (i) au moins un groupe organique en $C_3$-$C_{15}$ lié par une liaison SiC à l'atome de silicium et substitué par au moins un radical amino ou un radical guanidino.

. (2i) et au moins un radical alcoxy en $C_1$-$C_5$ ou un radical alcoxyalkylène-oxy en $C_3$-$C_6$.

- une quantité efficace d'un catalyseur de condensation.

Par quantité efficace de catalyseur de condensation, on entend par exemple de 0,001 à 1 partie en poids d'au moins un composé d'un métal choisi généralement parmi l'étain, le titane et le zirconium et leurs mélanges.

Comme catalyseur de condensation on peut utiliser les monocarboxylates et les dicarboxylates d'étain tels que l'éthyl-2 hexanoate d'étain, le dilaurate de dibutylétain, le diacétate de dibutylétain (voir le livre de NOLL "Chemistry and technology of silicone", page 337, Academic Press, 1968 - 2ème édition).

Les chelates d'étain de valence IV hexacoordinés tels que ceux décrits dans la demande de brevet européen EP-A-147 323 et le brevet US-A 4 517 337 cités comme référence sont particulièrement appropriés.

Sont également préférés, les catalyseurs de condensation qui sont un mélange d'un bis(β-dicétonate) de diorganoétain avec un dérivé organique de l'étain également de valence IV, mais exempt de fonction β-dicétonato, et possèdant au moins un atome d'étain, chaque atome d'étain portant deux radicaux organiques liés par une liaison Sn-C, les deux autres valences étant satisfaites au moyen de radicaux choisis parmi les radicaux organiques ou inorganiques liés par une liaison SnO, SnS, par des atomes d'halogènes, par des groupes hydroxy et par des atomes d'oxygène.

Ces dérivés organiques de l'étain de valence IV exempts de fonction β-dicétonato peuvent être en particulier des sels d'étain répondant aux formules :

$A_2SnR^6_2$

$R^6_2Sno$,

$AR^6_2SnOSnR^6_2A$

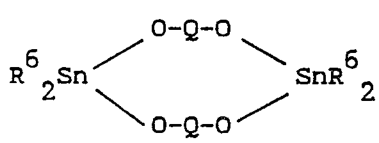

dans lesquelles :

- $R^6$ représente un radical hydrocarboné, halogéné ou non, en $C_1$-$C_{20}$,
- A représente un radical organique ou inorganique, lié à l'atome d'étain par une liaison Sn-O ou Sn-S, un atome d'halogène,

Q représente un radical alkylène en $C_2$-$C_{10}$, A peut être choisi dans le groupe constitué :

(i) des radicaux mono-carboxylates de formule $R^7COO$, $R^7$ étant un radical hydrocarboné, halogéné ou non, en $C_1$-$C_{20}$,

(2i) des radicaux dicarboxylates de formule

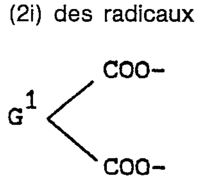

liés à un même atome d'étain ou à deux atomes d'étain conduisant aux deux formules :

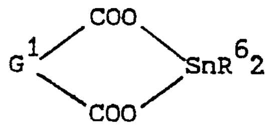

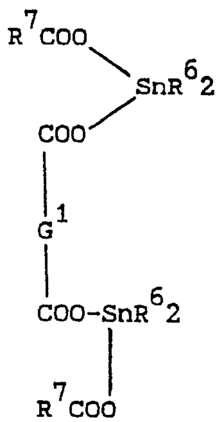

dans lesquelles $G^1$ représente un radical hydrocarboné divalent en $C_1$-$C_{15}$ et $R^7$ a la signification donnée sous (i),

(3i) des radicaux dicarboxylates de formule $R^7OCOG^1COO$ dans laquelle $R^7$ et $G^1$ ont la signification donnée respectivement sous (i) et (2i).

Les sels d'étain ci-dessus sont bien connus et sont décrits en particulier dans l'ouvrage de NOLL précité, les brevets US-A-3 186 963, 3 862 919, le brevet belge 842 305 et le brevet britannique GB-A-1 289 900 cités comme référence.

Les charges minérales sont utilisées à raison de 0 à 250 parties, de préférence de 5 à 200 parties pour 100 parties de PF de formule (1).

Ces charges peuvent se présenter sous la forme de produits très finement divisés dont le diamètre particulaire moyen est inférieur à 0,1 micromètre. Parmi ces charges figurent les silices de combustion et les silices de précipitation ; leur surface spécifique BET est généralement supérieure à 40 m2/g.

Ces charges peuvent également se présenter sous la forme de produits plus grossièrement divisés, de diamètre particulaire moyen supérieur à 0,1 micromètre. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydraté ou non), le nitrure de bore, le lithopone, le métaborate de baryum, le sulfate de baryum, les microbilles de verre ; leur surface spécifique est généralement inférieure à 30 m2/g.

Ces charges peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysiloxanes (brevet français FR-A-1 126 884, FR-A-1 136 885, FR-A-1 236 505; brevet anglais GB-A-1 024 234). Les charges traitées renferment, dans la plupart des cas, de 3 à 30 % de leur poids de composés organosiliciques.

Les charges peuvent être constituées d'un mélange de plusieurs types de charges de granulométrie différente ; ainsi par exemple, elles peuvent être constituées de 30 à 70 % de silices finement divisées de surface spécifique BET supérieure à 40 m2/g et de 70 à 30 % de silices plus grossièrement divisées de surface spécifique inférieure à 30 m2/g.

Les compositions selon l'invention peuvent éventuellement contenir en outre pour améliorer notamment l'adhérence des EVF de 0 à 20 parties, de préférence de 1 à 15 parties d'au moins un additif choisi parmi des aminoorganosilanes, aminoorganopolysiloxanes et guanidinoorganosilanes portant par molécule à la fois :

.(i) au moins un groupe organique en $C_3$-$C_{15}$ lié par une liaison SiC à l'atome de silicium et substitué par au moins un radical amino ou un radical guanidino.

.(2i) et au moins un radical alcoxy en $C_1$-$C_5$ ou un radical alcoxyalkylène-oxy en $C_3$-$C_6$.

Ces additifs et leurs modes d'utilisation sont en particulier décrits dans les brevets US-A-2 754 311, US-A-2 832 754, US-A-2 930 809, US-A-2 971 864, US-A-3 341 563, US-A-3 686 375, US-A-4 180 642.

Parmi ces additifs on peut en particulier citer les silanes de formule :

$H_2N(CH_2)_3Si(OC_2H_5)_3$

$H_2N(CH_2)_3Si(OCH_3)_3$

$H_2N(CH_2)_2NH(CH_2)_3Si(OCH_3)_3$

Des promoteurs d'adhérence particulièrement appropriés sont les silanes de formule :

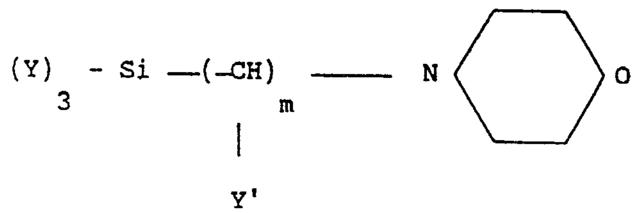

Dans laquelle Y est un radical alkyle ou alcoxy ayant inclusivement de 1 à 4 atomes de carbone, au moins deux des radicaux Y étant des radicaux alcoxy, Y′ identiques ou différents sont shoisis parmi l'atome d'hydrogène et un radical alkyle ayant inclusivement de 1 à 3 atomes de carbone et m est un nombre entier compris entre 3 et 10 inclusivement.

Comme silane on peut citer :

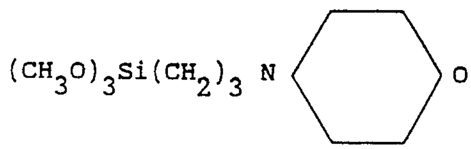

gammamorpholinopropyltriméthoxysilane

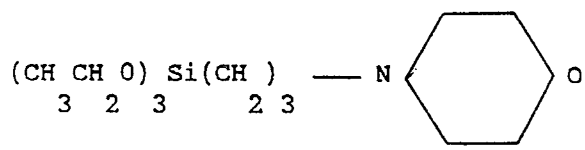

gammamorpholinopropyltriéthoxysilane.

Ces produits et leur procédé de préparation sont décrits par John L. SPEIER, I. Org. Chem., vol. 36, n° 21, 1971, page 3 120.

EXEMPLE 1 :

On introduit dans un réacteur 20 g (0,025 mole) de diméthylpolysiloxane à groupement hydroxy en bout de chaîne, ayant 4,25 % en poids de radicaux hydroxy. Ce polysiloxane a pour formule moyenne

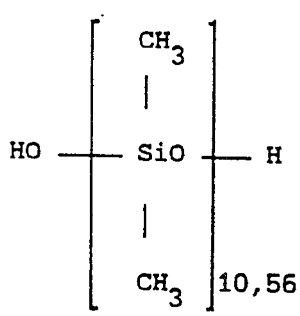

On agite pendant 5 minutes sous dépression 5 à 10 mm Hg à 20° C, puis on casse le vide et introduit de l'azote. Sous atmosphère d'azote et sous agitation on augmente progressivement la température jusqu'à 80° C en 30 minutes. Lorsque la température est stabilisée à 80° C on introduit un mélange de 14 grammes (0,103 moles) de méthyltriméthoxysilane et de 0,263 g de bis-acétylacétonate de Zn (~ 0,001 mole). Après une heure d'agitation à 80° C on fait un vide de 1 mm Hg dans le réacteur et maintient 1 heure à 80° C avant de laisser revenir la masse réactionnelle à la température ambiante,

L'analyse du diméthylpolysiloxane obtenu, par RMN$^{29}$Si permet de déterminer que nous avons 97,8 % de la masse réactionnelle restante qui correspond à une huile dont la formule moyenne est:

$$(CH_3O)_2(CH_3)Si - O - \left[ Si(CH_3)_2O \right]_{12} - Si(CH_3)(OCH_3)_2$$

EXEMPLE 2 :

On opère de la même façon et avec les mêmes quantités des mêmes produits que dans l'exemple 1, si ce n'est que le catalyseur organozincique est du bis(diphényl 1-3, propanedionato 1-3)zinc. On en utilise 0,001 mole (0,51 g).

L'analyse du diméthylpolysiloxane obtenu, par RMN$^{29}$Si, permet la détermination de l'obtention d'une huile de formule moyenne

$$(CH_3O)_2(CH_3)Si - O \left[ Si(CH_3)_2O \right]_{11,5} - Si(CH_3)(OCH_3)_2$$

EXEMPLE 3

On opère de la même façon que dans l'exemple 1, si ce n'est :

- qu'on utilise 9,63 g de méthyltriméthoxysilane ($\sim$ 0,071 mole)
- qu'on utilise 0,47 g de bis(phényl 1 - méthyl 5, hexanedionato 1-3) zinc, soit 1 millimole.
- qu'on n'effectue pas l'opération de dévolatilisation en fin de réaction.

L'analyse du diméthylpolysiloxane obtenu, par RMN$^{29}$Si permet de déterminer que nous avons obtenu 93 % d'une huile de formule moyenne

$$(CH_3O)_2(CH_3)Si - O \left[ Si(CH_3)_2O \right]_{10,56} - Si(CH_3)(OCH_3)_2$$

EXEMPLE 4 :

On opère de la même façon que dans l'exemple 2, si ce n'est :

- qu'on introduit 32 g (0,23 mole) de méthyltriméthoxysilane
- qu'on n'élimine pas l'excès de silane, sous pression réduite, en fin de réaction.

Les pourcentages molaires exprimés en moles de silicium déterminés par analyse RMN$^{29}$Si sont les suivants :

$(CH_3O)_2Si(CH_3)\ O_{1/2}$ = 11,7 %,
$(CH_3)_2SiO_{2/2}$ = 54,4 %,
$(CH_3O)_3Si(CH_3)$ = 33 %,

$$(CH_3)_2Si\left\langle\begin{matrix} OH \\ O1/2 \end{matrix}\right. \qquad = \quad 0,4\ \%,$$

$(CH_3O)Si(CH_3)_2O_{1/2}$ = 0,3%.

On obtient donc une huile de formule moyenne

$$(CH_3O)_2(CH_3)Si - O - \left[ Si(CH_3)_2\ O \right]_{10,8} Si(CH_3)(OCH_3)_2$$

et un excès de méthyltriméthoxysilane n'ayant pas réagi.

EXEMPLE 5 :

On opère de la même façon que dans l'exemple 4, si ce n'est

- qu'on utilise 0,047 g (0,1 millimole) de bis(phényl 1 méthyl-5 hexanedionato 1-3) zinc.

Les pourcentages molaires exprimés en moles de silicium déterminés par l'analyse RMN$^{29}$Si sont les suivants :

$(CH_3O)_2(CH_3)Si\ O_{1/2}$ = 12 %,
$(CH_3)_2SiO_{2/2}$ = 56,3 %,
$(CH_3O)_3Si(CH_3)$ = 31,1 %,

$$(CH_3)_2\underset{OH}{Si}\ \ O_{1/2} \quad = \quad 0,2\ \%,$$

$(CH_3O)Si(CH_3)_2O\ 1/2$ = 0,2 %

On obtient donc une huile de formule moyenne

$$(CH_3O)_2(CH_3)Si - O - \left[ Si(CH_3)_2\ O \right]_{11,3} Si(CH_3)(OCH_3)_2$$

et un excès de méthyltriméthoxysilane.

EXEMPLE 6 (comparatif) :

On opère de la même façon et avec la même quantité de produits que dans l'exemple 1, si ce n'est qu'on utilise 0,696 g (1 millimole) de tris(phényl 1,3 propane dionato 1,3) aluminium.

Le produit obtenu après dévolatilisation et analysé par RMN$^{29}$Si correspond à l'huile de départ, hydroxylée à chaque extrémité de chaîne. Il n'y a donc pas eu de fonctionnalisation de cette huile de départ.

EXEMPLE 7 (comparatif) :

On opère de la même façon et avec les mêmes quantités de réactifs que dans l'exemple 1, si ce n'est qu'on utilise 0,636 g ( 1 millimole) de tris(phényl 1 méthyl 5 hexanedionato 1,3) aluminium.

Le produit obtenu après dévolatilisation est analysé par RMN$^{29}$Si. On trouve (Me = $CH_3$ ci-après) :

$Me_2(OMe)SiO_{1/2}$ = 6,7 %
$Me_2SiO_{2/2}$ = 79,1 %
$(MeO)_2MeSiO_{1/2}$ = 9,5 %
$(MeO)Me_2SiO_{1/2}$ = 4,1 %

La fonctionnalisation n'est donc que partielle avec pour principal inconvénient la formation de groupements bloqueurs de chaîne $Me_2(OMe)SiO_{1/2}$.

EXEMPLE 8 :

On procède de la même façon qu'à l'exemple 1 en utilisant toujours 20 g (0,025 mole) de polydiméthylsiloxane ayant 4,25 % en poids de radicaux hydroxy, mais on utilise un mélange de 14,7 g (~ 0,071 mole) de tétraéthoxysilane $Si(OEt)_4$ et de 0,51 g (1 millimole) de bis (diphényl 1-3 propanedione 1,3) zinc.

Après 1 heure d'agitation à 80°C on refroidit le mélange réactionnel que l'on analyse par RMN$^{29}$Si.

Le taux de transformation des motifs $Me_2(OH)SiO_{1/2}$ est de 91 % avec formation de motifs terminaux

$$- O - \overset{Me}{\underset{Me}{Si}} - O\ Si(OEt)_3 \qquad de \qquad 57\ \%$$

$- O - SiMe_2OSi\ (OEt)_2O_{112}$ = 11 %
$- O - Si(Me_2)OSi(OEt) - O_{2/2}$ = 8 %

EXEMPLE 9 :

On reproduit l'exemple 8 précédent si ce n'est que le catalyseur introduit correspond à 0,47 g (1 millimole) de bis(phényl 1 méthyl 5 hexanedionato 1-3) zinc.

Le mélange réactionnel est alors analysé par RMN$^{29}$Si. Le taux de transformation des motifs terminaux - O - $SiMe_2(OH)$ atteint 92,5 % avec formation de motifs terminaux - $OSiMe_2OSi(OEt)_3$ de 70 % et - $OSiMe_2$ - O - $Si(OEt)_2O_{1/2}$ de 13,4 %.

EXEMPLE 10 :

On reproduit l'exemple 8 si ce n'est que le catalyseur utilisé correspond à 1 millimole de tris(phényl 1,3 propanedionato 1,3) aluminium. Le produit obtenu est analysé par RMN$^{29}$Si.

Le taux de transformation des motifs $Me_2Si(OH)O_{1/2}$ est nul.

EXEMPLE 11 :

On reproduit l'exemple 8 si ce n'est que le catalyseur introduit correspond à 1 millimole de tris (phényl 1 méthyl 5 hexanedionato 1, 3) aluminium. Le produit obtenu est analysé par RMN$^{29}$ Si.

Le taux de transformation des motifs $Me_2Si(OH)O_{1/2}$ est de 100 %.

On trouve dans la masse réactionnelle (pourcentages molaires exprimés en mole de silicium).

$Me_2Si(OEt)O_{1/2}$ = 6 %
$Me_2SiO_{2/2}$ = 81 %
$(EtO)_3SiO_{1/2}$ = 2,5 %
$Si(OEt)_4$ = 0,3 %
$Si(OEt)_2O_{2/2}$ = 4 %

La fonctionnalisation est dans ce cas partielle avec pour principal inconvénient la formation abondante de motifs bloqueurs de chaîne $Me_2Si(OEt)O_{1/2}$.

EXEMPLE 12 :

On agite 1000 g (ce qui correspond à 50 millimoles de groupement OH) d'une huile polydiméthylsiloxane, de viscosité 20 000 mPa.s à 25° C, à groupements terminaux silanol (-$OSiMe_2OH$), ayant 850 ppm (parties par million) de radicaux hydroxy fixés au silicium, pendant 6 minutes à 20° C sous dépression (1 mm Hg), puis on casse le vide en introduisant de l'azote.

Sous atmosphère d'azote et sous agitation on augmente progressivement la température jusqu'à atteindre 80° C en 30 minutes. Lorsque la température est stabilisée à 80° C on introduit 49,4 g (237,5 millimoles) de tétraéthoxysilane (également appelé silicate d'éthyle) $Si(OC_2H_5)_4$ et 1,18 g (2,5 millimole) de bis (phényl 1 méthyl 5 hexanedionato 1-3)zinc.

Après 1 heure d'agitation à 80° C on refroidit le mélange réactionnel.

La viscosité du mélange contenant essentiellement l'huile fonctionnalisée est de 31 700 mPa.s à 25° C.

EXEMPLE 13 :

Dans un réacteur en verre muni d'un système d'agitation, d'une arrivée d'azote, d'un condenseur et d'un système de mesure de température on introduit 800 parties de la masse réactionnelle de l'exemple 12 et on chauffe à 80° C jusqu'à stabilisation de la température (1 heure), puis on introduit dans le réacteur 24 grammes d'un silane aminé de formule $H_2N(CH_2)_2NH(CH_2)_3Si(OCH_3)_3$. Après avoir agité encore un quart d'heure à 80° C on introduit dans le réacteur 400 mg de bis(acétylacétonate) de dibutylétain et on agite 15 minutes à 80° C. Enfin on introduit pendant 6 minutes dans le réacteur 64 grammes de silice de type AEROSIL 150 (silice de combustion, dont la surface spécifique est de 150 $m^2/g$, commercialisée par la Société DEGUSSA) que l'on mélange à la masse réationnelle de façon homogène. On arrête le chauffage et on refroidit le mélange à 25° C. On dégaze pendant 5 minutes la masse réactionnelle sous un vide d'environ 1 millimètre de mercure.

On coule la composition obtenue (le mastic) dans deux tubes étanches en aluminium. L'un des tubes est conservé 48 heures à 20° C, tandis que l'autre est soumis pendant 48 heures à une température de 100° C, ce qui équivaut à une durée de stockage de 1 mois à 20° C.

On étale sur une plaque en acier inoxydable revêtue de papier siliconé le contenu de chaque tube, de manière à obtenir une couche de 2 mm d'épaisseur, avec chaque composition.

On prélève (démoule) chaque film d'élastomère obtenu après 24, 48 heures ou 72 de réticulation et on en mesure, à température de 20° C, les propriétés dynamométriques.

Les résultats sont rassemblés dans le tableau ci-après.

EXEMPLES 14-18 :

On reproduit l'exemple 12 pour la fonctionnalisation de l'huile en modifiant la nature du catalyseur de fonctionnalisation ou la nature de l'alcoxysilane, sans modifier les rapports molaires de chacun des constituants.

On reprend ensuite la procédure décrite dans l'exemple 13 pour préparer le mastic correspondant à la masse réactionnelle obtenue.

Les résultats sont rassemblés dans le tableau ci-après.

On constate que les chélates d'aluminium sont inefficaces pour obtenir des compositions présentant de bonnes propriétés dynamométriques.

Dans ce tableau

$Q^1 = C_6H_5 - CO - CH - CO - CH_2 - CH(CH_3) - CH_3$
$Q^2 = C_6H_5 - CO - CH - CO - C_6H_5$ -

$T_{20}$ = signifie tube conservé 48 heures à 20°C
$T_{100}$ = signifie tube conservé 48 heures à 100°C
DSA = signifie dureté SHORE A, appréciée selon la norme ASTMD 2240,
RR = signifie résistance à la rupture en MPa (mégapascals) mesurée selon la norme AFNOR T 46 002 correspondant à la norme ASTMD 412,
AR = signifie allongement à la rupture en %, mesuré selon la norme AFNOR T 46 002,
temps (mn) peau : signifie temps, exprimé en minute, de formation de peau.
coulabilité : - test BOEING
PM = pas mesurable -

| | Exemple 13 | Exemple 14 | Exemple 15 | Exemple 16 | Exemple 17 | Exemple 18 |
|---|---|---|---|---|---|---|
| | MeSi (OMe)3 1 ZnQ 2 | MeSi (OMe)3 2 ZnQ 2 | Si(OEt)4 1 ZnQ 2 | Si(OEt)4 2 ZnQ 2 | MeSi (OMe)3 1 AlQ 3 | Si(OEt)4 1 AlQ 3 |
| Observation | pas de gel | pas de gel | pas de gel | exothermicité lors du rajout du silane aminé | pas de gel | gel |
| Coulabilité | non coulant | non coulant | non coulant | non coulant | non coulant | PM |
| temps (mn) peau T 20 | 10 | 10 | 10 | 15 | 15 | PM |
| temps (mn) peau T 100 | 15 | 15 | 15 | 20 | PM | PM |
| DSA T 20 après 48/72h réticulation | 26/30 | 25/29 | 13/18 | 5/14 | PM | PM |
| DSA T 100 après 48/72h réticulation | 16/22 | 18/24 | 8/15 | 7/18 | PM | PM |
| RR T 20 | 0,97 | 1,10 | 0,95 | 0,67 | PM | PM |
| RR T 100 | 1,17 | 1,13 | 0,93 | 0,96 | PM | PM |
| AR T 20 | 267 | 352 | 405 | 356 | PM | PM |
| AR T 100 | 485 | 475 | 363 | 508 | PM | PM |

**Revendications**

1 - Procédé de préparation de diorganopolysiloxane linéaire comprenant au moins deux groupements alcoxy à chaque extrémité de chaîne, caractérisé en ce qu'on fait réagir au moins un diorganopolysiloxane linéaire comprenant un groupement hydroxy à chaque extrémité de chaîne avec au moins un

polyalcoxysilane de formule :
$(R^1)_a(OR^6)_bSi(OR^2)_{4-a-b}$ (3)
en présence d'une quantité catalytiquement efficace d'un complexe de zinc de formule :
$ZnQ_2$, (4)
- où a est 0 ou 1,
- où b est 0,1 ou 2,
- où $R^1$ représente un radical monovalent hydrocarboné saturé ou non en $C_1$ à $C_{13}$, substitué ou non substitué.
- où $R^2$ représente un radical organique aliphatique ayant de 1 à 8 atomes de carbone choisi notamment entre les radicaux alkyle, les radicaux alkyléther, les radicaux alkylester, les radicaux alkylcétone, les radicaux alkylcyano et les radicaux aralkyle ayant de 7 à 13 atomes de carbone,
- où $R^6$ peut avoir ma même signification que celle de $R^2$ ou représente un radical ayant moins d'atomes de carbone que $R^2$,
- où Q est un anion monovalent de formule

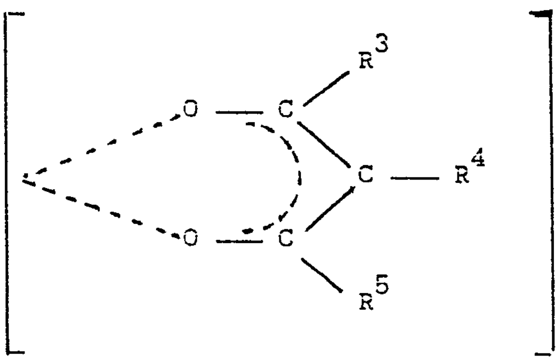

(5)

dans laquelle $R^3$ et $R^5$, identiques ou différents, représentent des atomes d'hydrogène, des radicaux alkyles en $C_1$ à $C_{12}$, halogénés ou non, des radicaux alcényles en $C_2$ à $C_8$, halogénés ou non, des radicaux cyclakyles halogénés ou non en $C_4$ à $C_8$, des radicaux aryles mononucléaires, halogénés ou non en $C_6$ à $C_{10}$, des radicaux arylalkyles mononucléaires halogénés ou non en $C_7$ à $C_{12}$, des radicaux alcoxy en $C_1$ à $C_5$, halogénés ou non, des radicaux acyloxy en $C_1$ à $C_6$, des radicaux cyanoalkyles ayant la partie alkyle en $C_1$ à $C_4$, des radicaux cyanoalcoxy ayant la partie alcoxy en $C_1$ à $C_5$, dans laquelle $R^4$ représente l'atome d'hydrogène, un radical hydrocarboné, halogéné ou non, en $C_1$ à $C_8$, choisi parmi les radicaux alkyles, alcényles et et les radicaux aryles mononucléaires, $R^4$ pouvant se coupler avec $R^5$ pour donner un radical hydrocarboné cyclique en $C_5$ à $C_{12}$, subtitué ou non par des radicaux chloro, nitro, cyano.

2 - Procédé selon la revendication 1, caractérisé en ce que le diorganopolysiloxane linéaire comprenant aux moins deux groupements alcoxy à chaque extrémité de chaîne a pour formule

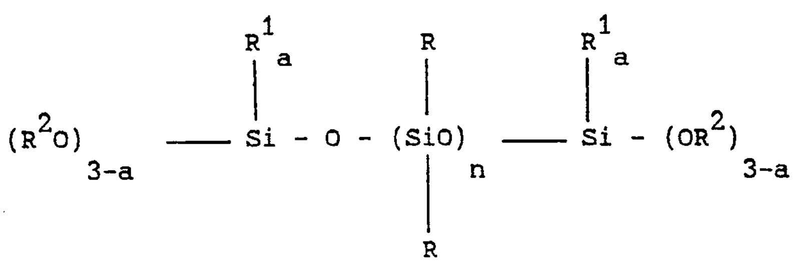

(1)

et en ce que le diorganopolysiloxane linéaire comprenant un groupement hydroxy à chaque extrémité de sa chaîne a pour formule

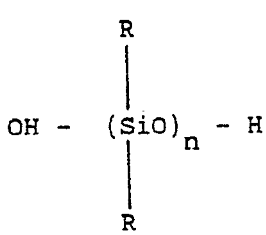

(2)

où $R^1$ et $R^2$ ont la même signification que celle donnée dans la revendication 1,
où les radicaux R, identiques ou différents représentent des radicaux monovalents hydrocarbonés ayant de 1 à 10 atomes de carbone, éventuellement substitués par des atomes d'halogènes ou des groupes

cyano,
où a est 0 ou 1,
où n a une valeur suffisante pour conférer aux diorganopolysiloxanes de formule (1) et (2) une viscosité de 25 à 1 000 000 mPa.s à 25°C.

3 - Procédé selon l'une quelconque des revendications précédentes caractérisé en ce que pour 1 mole de groupement ≡ SiOH du diorgano polysiloxane linéaire de formule (2) on utilise 1 à 5 moles, de préférence 2 à 4,8 moles de polyalcoxysilane de formule (3).

4 - Procédé selon l'une quelconque des revendications 2 ou 3, caractérisé en ce que le radical R dans les formules (1) et (2) est choisi parmi les radicaux méthyle, phényle, vinyle et trifluoro-3,3,3 propyle.

5 - Procédé selon l'une quelconque des revendications précédentes caractérisé en ce que le polyalcoxysilane de formule (3) est choisi parmi le méthyltriméthoxysilane, le tétraéthoxysilane, méthoxytriéthoxysilane.

6 - Procédé selon l'une quelconque des revendications précédentes caractérisé en ce que le catalyseur de formule (4) est choisi parmi :
. le bis acétylacétonate de zinc
. le bis (diphényl 1-3 propanedione 1-3)zinc
. le bis (phényl 1 - méthyl 5 hexanedione 1-3)zinc

7 - Procédé selon l'une quelconque des revendications précédentes caractérisé en ce que sous atmosphère inerte, on agite le polysiloxane linéaire comprenant un groupement hydroxy à chaque extrémité de chaîne, tout en le chauffant à une température inférieure à 140°C, on ajoute le polyalcoxysilane de formule (3) et le catalyseur de formule (4), on maintient la température et agite pendant une durée inférieure à 2 heures.

8 - Produit obtenu avec le procédé selon les revendications 1 à 7.

9 - Utilisation du produit selon la revendication 8 pour la préparation de compositions polysiloxanes monocomposantes stables au stockage en absence d'humidité et réticulant en élastomère en présence d'humidité.

Office européen des brevets

# RAPPORT DE RECHERCHE EUROPEENNE

Numero de la demande

EP 89 42 0273

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 311 817 (GENERAL ELECTRIC) * Revendications 1,2,14 page 10, lignes 13-27 * --- | 1 | C 08 G 77/18<br>C 08 G 77/08<br>C 08 L 83/04 |
| X | GB-A-2 079 745 (GENERAL ELECTRIC) * Revendication 1; page 5, lignes 35-39 * --- | 1 | |
| A | US-A-4 460 739 (B.A. ASHBY) * Revendications 1,6; colonne 9, lignes 18-28 * --- | 1 | |
| A | US-A-4 680 364 (G.M. LUCAS) * Revendications 1,7,17 * ----- | 1 | |
| | | | **DOMAINES TECHNIQUES RECHERCHES (Int. Cl.5)** |
| | | | C 08 G<br>C 08 K<br>C 08 L |

Le présent rapport a été établi pour toutes les revendications

| Lieu de la recherche | Date d'achèvement de la recherche | Examinateur |
|---|---|---|
| LA HAYE | 10-11-1989 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)